# EUROPEAN PATENT APPLICATION

(11) **EP 2 590 390 A1**
(43) Date of publication of application: **08.05.2013**
(21) Application number: 11187452.5
(22) Date of filing: 02.11.2011
(51) Int. Cl.: H04M 1/725, G06Q 10/10

(54) **Combined pushcast and live conference**

(71) Applicant: Research In Motion Limited, Waterloo, ON N2L 3W8 (CA)
(72) Inventor: Bergmann, Carsten, Michael, Redwood City, CA California 94065 (US)
(74) Representative: MERH-IP Matias Erny Reichl Hoffmann

(57) **Abstract**

Aspects relate to pushing of content for use on mobile devices, and subsequent retrieval of such pushed content for concurrent presentation with voice and/or video data transmitted to the mobile device. The pushed content can be indexed and otherwise synchronized with the voice and/or video (or otherwise controlled by a presenter) through a group messaging channel. A calendar entry can include a link to the pushed content, such that activation of the calendar entry can also cause a content presentation application to load and begin presenting a portion of the pushed content. A link to local storage of such pushed content can be provided in such calendar entry. The content presentation application can monitor device events or interrupts in order to detect an event indication generated from the calendar application.

## Description

### FIELD OF THE INVENTION:

The present application relates to mobile device communication, and more particularly to group communication capabilities and services for mobile devices.

### BACKGROUND:

Mobile devices are used for voice and data communications. Increasingly, mobile devices can be used in a business environment. Businesses can have a need to provide conferencing capabilities, where a moderator can have an audio and/or video feed that is in the context of or otherwise relates to a set of materials, such as a presentation. Mobile devices have different network communication capabilities than do typical landline devices. Approaches to facilitating conferencing capabilities on mobile devices are desirable.

### BRIEF DESCRIPTION OF THE DRAWINGS

Reference will now be made, by way of example, to the accompanying drawings which show example embodiments of the present application, and in which:

Figure 1 depicts a context and components of a system in which aspects of the description can be practiced;

Figure 2 and Figure 3 depict example aspects of mobile devices that can implement aspects disclosed herein;

Figure 4 depicts an example arrangement and interaction among components of systems according to this disclosure, as well as interoperation of functional components within a given mobile device; and

Figures 5 and 6 depict methods that can be performed by a mobile device implementing aspects described herein.

### DESCRIPTION

Mobile devices are increasingly used for communication, such as voice calling and data exchange. Also, mobile devices increasingly can use a wider variety of networks for such communication. For example, a mobile device can have a broadband cellular radio and a local area wireless network radio. Additionally, the broadband cellular capability of a mobile device may itself support a variety of standards, or protocols that have different communication capabilities, such as GSM, GPRS, EDGE and LTE.

One characteristic of mobile devices is that they can have sporadic access to any network, and often can have sporadic access to faster and/or cheaper networks. For example, mobile devices often can have an IEEE 802.11 wireless LAN access capability, as well as a broadband wireless radio capability. Sometimes, a mobile device may be able to use an 802.11 access point, while at other times, the mobile device may only have broadband wireless reception, and at still other times, the mobile device may have no current wireless capability. Different cost structures for usage of these different data networks can be in place, in addition to differences in the speed of different networks

Thus, while relying on general availability of a fast and reliable network connection that can support a content stream may be acceptable for a wired network device, such an assumption would be considerably less reliable for a wireless device, such as a mobile device. Nevertheless, it is desirable to be able to support real time conferencing involving presentation materials, for example, on mobile devices.

One approach to getting presentation material to mobile devices is to push content to the mobile devices at times when the mobile devices have access to a certain kind of network connection. For example, presentation content can be staged so that the content is distributed to different mobile devices when such mobile devices have access to an 802.11 network. However, such staging also can be done, for example, to cope with a more limited bandwidth but generally available broadband wireless connection, such that a large content item can be provided over a period of time to a given mobile device.

A software package can be provided on a mobile device to support such content push. An example of such a software package is known as Chalk™Pushcast™, which is available for mobile devices offered by Research in Motion. Such a software package can operate to receive and store content that will be performed at a future time on the mobile device on which it is installed.

Systems that use such a device-side application also can have a server that operates to push data to the devices, and to receive data to be pushed to the devices. However, having a capability to conduct a live conference that uses, and synchronizes to, materials pre-loaded on a given mobile device using one or more of voice and video would further extend the usefulness of such a capability.

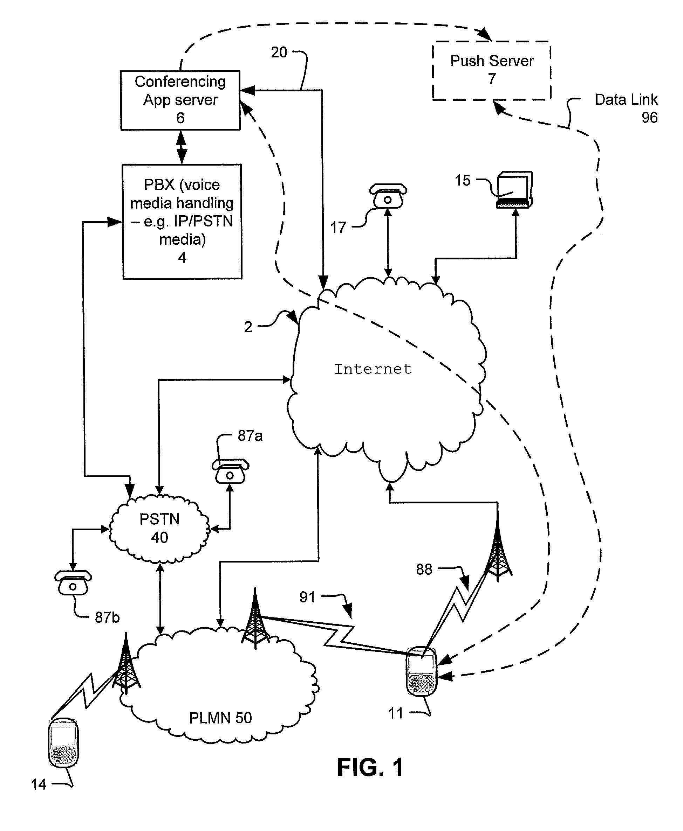

Figure 1 depicts a system, and context in which the system can operate, for pushing content that can be stored on a mobile device, and then used during a conference, where video, voice, and content synchronization information can be shared or otherwise provided to mobile devices in real-time or near real-time. By pre-staging the content, and conserving the network connection for real-time data, a better usage experience can be achieved.

Figure 1 depicts an example where a conference application server 6 is capable of communication with a PBX 4. Here, PBX 4 also can be implemented by one or more servers or other system component(s) that provides a capability of supporting bridging and other connections between and among different types of media and bearer channels. For example, PBX 4 may support connections from the PSTN 40, as well as SIP signaled IP connections carried over packet networks (such as packet networks implementing an internet 2). Conferencing application server 6 can control PBX 4, in order to initiate or accept connections to, from and between the bearer media. Conferencing application server 6 also communicates with push server 7, which can receive inputs, such as content to be pushed from application server 6, and from other sources, such as from computers, such as computer 15. Conferencing application server 6 and PBX 4 can be provided within a private network, such as an intranet; they also can be hosted on another network or networks, such that the conferencing application server 5 and PBX 4 also represent provision of services according to the disclosed examples.

The depiction of Figure 1 also shows that an internet 2, such as the Internet operating with an IP infrastructure, can provide transport for voice and other content described herein. Such internet 2 can, for example, couple with wireless infrastructure 88 that supports local area network wireless access, such as IEEE 802.11 standards-based networks to support data transfer to and from a wireless device 11.

Device 11 also can include a capability to communicate over a Public Land Mobile Network (50) infrastructure 91. Other devices can use such PLMN 50 as well, such as a device 14. PLMN 50 also may communicatively couple with the PSTN 40 for carriage of voice and/or data traffic. Other devices can interoperate within the depicted context, such as PSTN telephones 87a and 87b, as well as SIP telephone 17.

A datalink 96 is depicted between mobile device 11 and push server 7. Such datalink 96 can be implemented within internet 2, and may also involve PLMN 50, and as such is depicted as a dashed line, indicating a logical, rather than a particular physical connection. Similarly, mobile device 11 also may have a communication channel to conferencing app server 6, which can implement a message passing framework. An example of such message passing framework, and exemplary usages thereof, is described below.

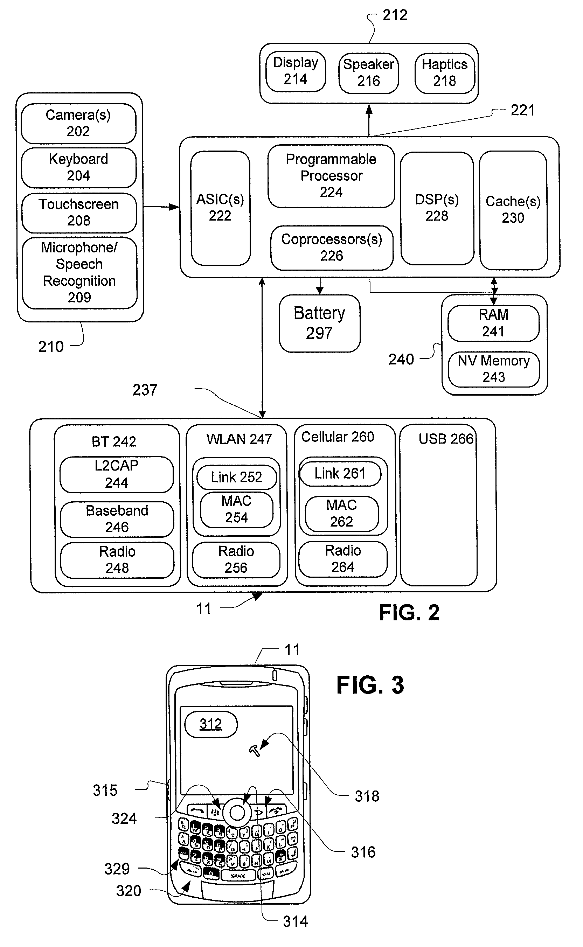

Figure 2 depicts example components that can be used in implementing mobile device 11 according to the above description. Figure 2 depicts that a processing module 221 may be composed of a plurality of different processing elements, including one or more ASICs 222, a programmable processor 224, one or more co-processors 226, which each can be fixed function, reconfigurable or programmable, and one or more digital signal processors 228. For example, an ASIC or co-processor 222 may be provided for implementing graphics functionality, encryption and decryption, audio filtering, and other such functions that often involve many repetitive, math-intensive steps. Processing module 221 can comprise memory to be used during processing, such as one or more cache memories 230.

Processing module 221 communicates with mass storage 240, which can be composed of a Random Access Memory 241 and of non-volatile memory 243. Non-volatile memory 243 can be implemented with one or more of Flash memory, PROM, EPROM, and so on. Non-volatile memory 243 can be implemented as flash memory, ferromagnetic, phase-change memory, and other non-volatile memory technologies. Non-volatile memory 243 also can store programs, device state, various user information, one or more operating systems, device configuration data, and other data that may need to be accessed persistently. A battery 297 can power device 11 occasionally, or in some cases, it can be a sole source of power. Battery 297 may be rechargeable.

User input interface 210 can comprise a plurality of different sources of user input, such as a camera 202, a keyboard 204, a touchscreen 208, and a microphone, which can provide input to speech recognition functionality 209. Output mechanisms 212 can include a display 214, a speaker 216 and haptics 218, for example. These output mechanisms 212 can be used to provide a variety of outputs that can be sensed by a user, in response to information provided from processing module 221.

Processing module 221 also can use a variety of network communication protocols, grouped for description purposes here into a communication module 237, which can include a Bluetooth communication stack 242, which comprises a L2CAP layer 244, a baseband 246 and a radio 248. Communications module 237 also can comprise a Wireless Local Area Network (247) interface, which comprises a link layer 252 with a MAC 254, and a radio 256. Communications module 237 also can comprise a cellular broadband data network interface 260, which in turn comprises a link layer 261, with a MAC 262. Cellular interface 260 also can comprise a radio 264 for an appropriate frequency spectrum. Communications module 237 also can comprise a USB interface 266, to provide wired data communication capability. Other wireless and wired communication technologies also can be provided, and this description is exemplary.

Referring to Figure 3, there is depicted an example of mobile device 11. Mobile device 11 comprises a display 312 and a cursor or view positioning device, here depicted as a trackpad 314, which may serve as another input member and can also be pressed in a direction generally toward housing to provide another selection input. Trackpad 314 permits multi-directional positioning of a selection cursor 318, such that the selection cursor 318 can be moved in an upward direction, in a downward direction and, if desired and/or permitted, in any diagonal direction. The trackpad 314 is, in this example, situated on a front face (not separately numbered) of a housing 320, to enable a user to maneuver the trackpad 314 while holding mobile device 11 in one hand. In other embodiments, a trackball or other navigational control device can be implemented as well.

The mobile device 11 in Figure 3 also comprises a programmable convenience button 315 to activate a selected application such as, for example, a calendar or calculator. Further, mobile device 11 can include an escape or cancel button 316, a menu or option button 324 and a keyboard 329. Menu or option button 324 loads a menu or list of options on display 312 when pressed. In this example, the escape or cancel button 316, menu option button 324, and keyboard 329 are disposed on the front face of the mobile device housing, while the convenience button 315 is disposed at the side of the housing. This button placement enables a user to operate these buttons while holding mobile device 11 in one hand. The keyboard 329 is, in this example, a standard QWERTY keyboard. Other mobile devices, for example, a touchscreen mobile device, a tablet, a netbook, a gaming console, or a Personal Digital Assistant (PDA) are also contemplated.

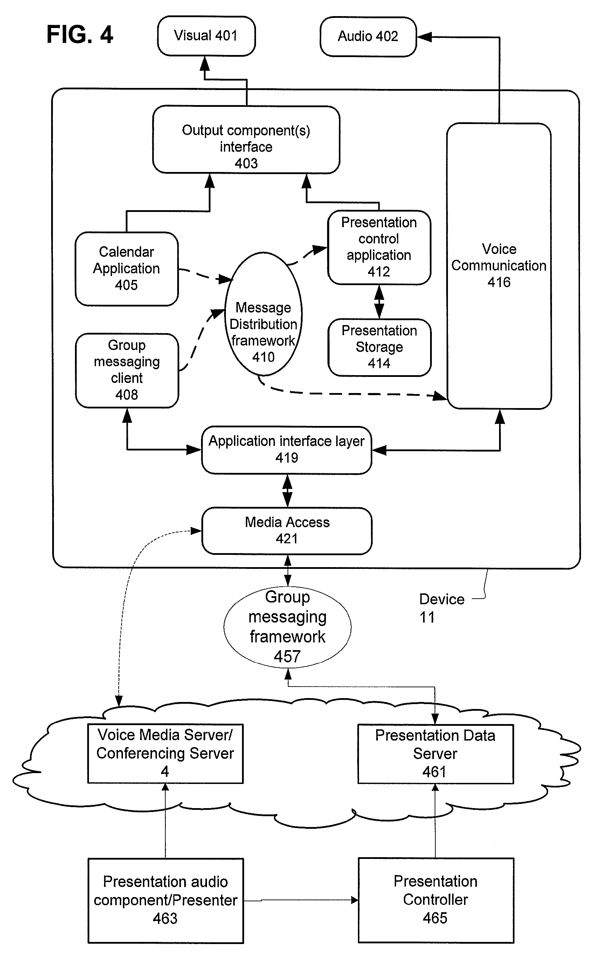

Figure 4 depicts a functionally-oriented view of how components introduced in Figure 1 can interoperate to implement aspects of the disclosure. In particular, device 11 includes a media access 421 component, which in this figure abstracts the underlying connection technologies, whether they be wireless LAN, piconet (e.g., Bluetooth®), or broadband wireless (e.g., 3G or 4G technologies), or a combination thereof.

An application interface layer 419 controls application access to the media access 421 component. One application that can use network resources, through interface layer 419 is a group messaging client 408. Group messaging client 408 can manage the addressing, transmission and reception of messages in a group of which mobile device 11 is a part.

In an example relating to conferencing, mobile device 11 may join a specified group or begin to listen to messages associated with a specified group in conjunction with joining an audio feed (e.g., "dialing in" in to a conference). Such group messaging client 408 can interoperate with a group messaging framework 457 that can be implemented, for example, by a multicasting algorithm, or by other approaches to distribution of such messages. In some example paradigms, the messages primary are received by mobile device 11; however, the mobile device 11 also can transmit such messages. For example, if the mobile device 11 is being used by a moderator of a conference, then the mobile device 11 may be a source of messages concerning content synchronization that are sent through group messaging client 408 to group messaging framework 457, and ultimately are received by other devices.

Group messaging client 408 can serve as an application messaging service for a number of applications, such that when a message is received at client 408, such message can be distributed through a message distribution framework 410 on mobile device 11. For example, group messaging client 408 may expose an API, which other applications can poll. By further example, client 408 may signal a given application when it detects reception of availability of a message for a particular application. Also, message distribution framework 410 can operate to distribute messages among different applications operable on mobile device 11. One example application is a calendar application 405. Calendar application 405 can maintain a calendar of events or tasks correlated to a time or timeframe in which those events and tasks are expected to occur. For example, a teleconference can be scheduled for a particular time and date by provision of an entry in calendar application 405. The entry can be represented by data stored in a database maintained by calendar application 405. The entry can be added to calendar application 405 by virtue of a message from group messaging client 408, indicating that an event is available to be added. Calendar application 405 can output a notification through an output component interface 403, indicating that a new calendar invite was received, and responsive to acceptance of the invite, then calendar application 405 can add the event to its database.

The entries maintained by calendar application 405 also can contain a variety of other information. For example, dial-in information for an audio bridge, or other identifying information for an audio portion of a conference can be maintained in such entry. Other examples of such identifying information include a URL for an online meeting forum, from which audio and video will be made available, such as through a multicast stream. Other information that can be associated or stored with a calendar entry includes a reference or other identification of content locally stored on mobile device 11 that is expected to be accessed or used during an event associated with the entry.

Such content may be made accessible through a presentation control application 412 that maintains a local presentation storage 414. Presentation control application 412 also can send/receive messages from through message distribution framework 410. For example, a message generated by calendar application 405 can cause presentation control application 412 to start, and access a specified portion of content stored in presentation storage 414. Such content can be stored as a file or files, for example, such as a presentation. The calendar application 405 can initially specify such a presentation file to be loaded by presentation control application 412. Subsequently, messages can be received at group messaging client 408 that index into particular portions of such content. By particular example, a particular slide within a slide deck can be identified. Other content also can be received by group messaging client 408, such as markups or annotations relating to a particular identified slide.

Additionally, calendar application 405 also can generate a message that is provided through message distribution framework 410 to voice communication component 416. For example, calendar application 405 can provide a feature that allows automatic joining of a conference identified by a particular entry, or automatic dialing of an identified telephone number and associated access code for a conference. These data elements that are maintained by calendar application 405 can be provided to voice communication component 416 through messaging distribution framework 410.

The above example components of mobile device 11 can output visual and audio data through output component interface 403, to be displayed or performed through one or more visual 401 and audio 402 outputs, such as those depicted in the example devices of Figure 2 and Figure 3.

Mobile device 11 interacts with other devices through such group messaging framework, for reception (or sending) of messages relating to content synchronization. Such messages can be generated from a presentation data server 461, while voice and/or video to which the local content is to be indexed or synchronized can be made available from voice media/conferencing server 4. One or more components of such information can be made available from a presentation audio source, such as a device 463 associated with a presenter. In one example, an instance of mobile device 11 can be used as device 463. Device 463 also can generate presentation content synchronization messages that can be sent to presentation controller 465, for subsequent distribution through server 461. Server 461 and controller 465 can be implemented by any of a variety of combinations of hardware and software. For example, server 461 can represent a geographically distributed and interconnected network of servers that operate to distribute such data to a potentially large number of devices, of which mobile device 11 is an example.

Additionally, data server 461 can operate to pre-stage/download content to mobile device 11 in advance of an event that is expected to use such content. Through such pre-staging, benefits such as lower peak usage of a network connection, usage of a faster or cheaper connection, and other such benefits can be achieved. The availability of group messaging concurrent with an audio (and potentially a video channel) allows synchronization of pre-staged content to what is being discussed, with reduced real-time data exchange.

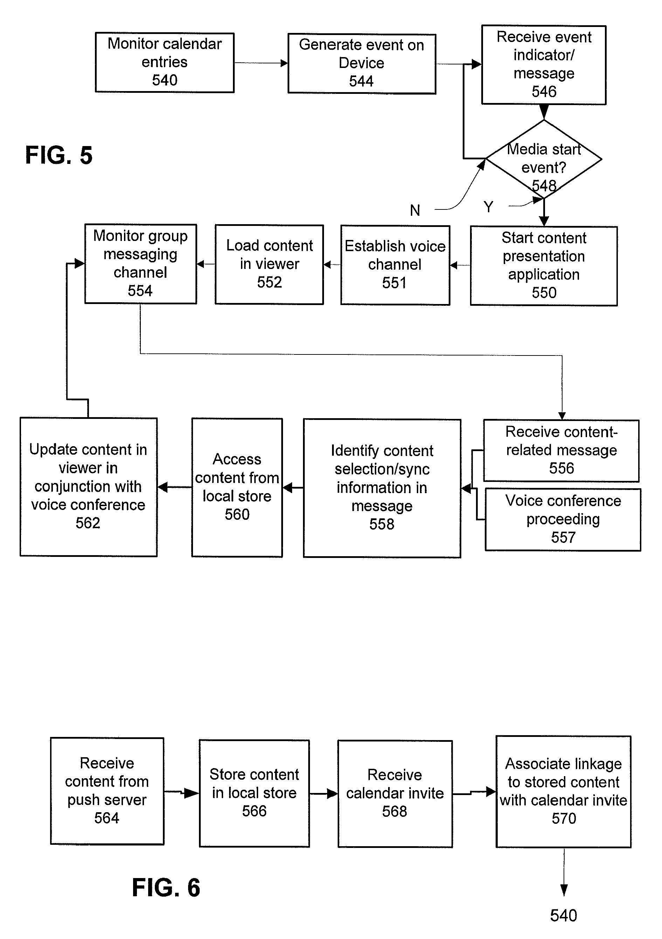

An example of a method that includes multiple of the functional components described with respect to Figure 4 is explained with respect to Figure 6. In the depicted example, mobile device 11 receives (564) content from push server 7. Such received content is stored (566) locally on device 11 (e.g., as managed by presentation control application 412 in presentation storage 414). A calendar invitation (event description) can be received (568) or created (e.g., a user of mobile device 11 also could manually create a calendar entry). The received and stored content is associated (570) with the calendar entry. As explained above, such association can include, for example, adding a descriptor concerning the content, such as a file name or location, or other reference, that can be messaged to presentation control application, to indicate retrieval thereof. Of course, other implementations of these examples may provide that calendar application can directly initiate retrieval of such content; however, it is generally expected that the content would be performed or otherwise managed by an application other than the calendar application, itself, whether the content to be presentation in an accepted presentation format, a Chalk media file, a Flash file, or a SilverLight® component, by way of example.

The process elements depicted in Figure 6 can be performed at any time prior to the usage of the content. In some examples, the content can be pushed and received only a short time before its usage, while in other examples, content can be pushed during the night, or in chunks over a distributed portion of time. Although Figure 6 depicts a process example where a calendar entry is created, and a linkage is used to initiate the retrieval and performance of such content on mobile device 11, the involvement of calendar application 405, or the creation of such a calendar entry is not necessary. For example, an ad hoc meeting can be initiated, where content can be pushed, and upon completion of such content push, the meeting can begin.

Figure 5 depicts an example where calendar application 405 monitors (540) calendar entries for arrival of a calendar entry (e.g., a time to begin preparations to join a conference has arrived). Upon arrival of an event, calendar application 405 can generate (544) a message that is distributed through message framework (410) or is otherwise received (546) by presentation control application 412. If the even indicates a media start event involving presentation control application (decision 548), then presentation control application 412 can start (550) a viewer for content, and load (552) the content in the viewer. A voice communication module (416) can be message or otherwise signaled to establish a voice channel. Such module 416 can be messaged separately, or also can listen to messages indicating establishment of a voice channel. Mobile device 11 can monitor (554) a group messaging channel associated with the event, such monitoring (554) can include joining a particular multicast channel, or otherwise receiving messages through a messaging framework. A content-related message can be received (556), and information in such message relating to selection of a particular portion of the content or synchronization information for a portion of content can be identified (558) in the message. From such identified information, a particular portion of the content can be accessed (560) from the local store or, if already accessed, indexed or displayed within the presentation viewer, as exemplified by updating (562) the content displayed in the viewer. Concurrently with such message reception and usage, a voice conference may proceed (557). The group messaging channel can be monitored periodically (554) by messaging client 408, or another mechanism for responsively updating/synchronizing the content displayed based on received information can be provided on mobile device 11.

In the foregoing, separate boxes or illustrated separation of functional elements of illustrated systems does not necessarily require physical separation of such functions, as communications between such elements can occur by way of messaging, function calls, shared memory space, and so on, without any such physical separation. As such, functions need not be implemented in physically or logically separated platforms, although they are illustrated separately for ease of explanation herein.

For example, different embodiments of devices can provide some functions in an operating system installation that are provided at an application layer or in a middle layer in other devices. Different devices can have different designs, such that while some devices implement some functions in fixed function hardware, other devices can implement such functions in a programmable processor with code obtained from a computer readable medium.

Further, some aspects may be disclosed with respect to only certain examples. However, such disclosures are not to be implied as requiring that such aspects be used only in embodiments according to such examples.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described embodiments can be made. Aspects that can be applied to various embodiments may have been described with respect to only a portion of those embodiments, for sake of clarity. However, it is to be understood that these aspects can be provided in or applied to other embodiments as well. Therefore, the above discussed embodiments are considered to be illustrative and not restrictive.

## Claims

1. A method performed on a mobile device having a speaker and a display, comprising:
receiving and storing content on a non-transitory readable medium at the mobile device;
receiving an indicator that the stored content is to be presented;
receiving voice information and content synchronization information, the content synchronization information indicating a portion of the content; and
outputting the voice information through the speaker and displaying the indicated portion of the content.

2. The method of claim 1, further comprising forming a calendar entry in a calendar program for the mobile device, the calendar entry comprising a link to the content stored on the tangible computer readable medium.

3. The method of any one of claims 1-2, further comprising monitoring the calendar entries to detect that the calendar entry has become active and responsively generating the indicator to present the stored content.

4. The method of claim 3, further comprising initiating a content presentation application, and loading the portion of the content into the content presentation application for output.

5. The method of claim 4, further comprising listening by a presentation module to messages passed on a message distribution framework of the mobile device, and identifying a message comprising the indicator that the stored portion of content is to be displayed.

6. A mobile device, comprising:
a processor;
a non-transitory readable medium, communicatively coupled to the processor, storing instructions, with the processor executing the instructions to:
receiving and storing visual content on through the network interface;
associating the visual content stored on the tangible computer readable medium with a calendar event;
monitoring arrival of the calendar event;
receiving voice information and content synchronization information, the content synchronization information indicating a portion of the stored visual content; and
outputting the voice information and displaying the indicated portion of the visual content.

7. The mobile device of claim 6, wherein the instructions further comprise instructions for creating a calendar entry with a link to the stored content.

8. The mobile device of any one of claims 6-7, wherein the instructions further comprise instructions for monitoring a calendar application for the arrival of the calendar entry, responsively initiating a content presentation application, and loading the indicated portion of content in the content presentation application.

9. The mobile device of claim 8, wherein a message distribution framework is operable to pass a message from the calendar application to the content presentation application indicating the portion of content to be loaded.

10. The mobile device of any one of claims 6-9, wherein the instructions further comprise instructions for a content presentation application that can be activated based on an event generated from a calendar application.

11. The mobile device of any one of claims 6-10, wherein the content presentation application is operable to receive messages passed on a message distribution framework, and identify a message indicating the portion of content to be loaded.

12. The mobile device of any one of claims 6-11, wherein the instructions further comprise instructions for adding a calendar entry in a calendar program for the mobile device, the calendar entry comprising a link to the content stored on the tangible computer readable medium, and responsive to detecting that the calendar entry has become active, initiating a content presentation application, and the loading of the linked content in the content presentation application.

13. A system, comprising:
a server coupled to a network and to a source of content, the server configured to detect availability of a mobile device to receive content pushed by the server to the mobile device, and responsively to push the content to the mobile device;
a mobile device comprising a processor capable of configuration by computer executable instructions to perform a method comprising
receiving content pushed from the server to the mobile device;
storing the content pushed from the server on a non-transitory readable medium;
receiving voice and content synchronization information on the mobile device, and using the content synchronization information to select a portion of the content from the tangible computer readable medium of the mobile device and displayed on a display of the mobile device concurrently with outputting of the voice information through a speaker of the mobile device.

14. The system of claim 13, further comprising a presentation controller for generating the content synchronization information based on commands received from a presentation unit controlled by a presenter.

15. The system of claim 14, wherein the presentation unit is operable to capturing audio information generated by the presenter and to capturing inputs indicative of changes to the portion of content to be displayed on the mobile device.

## Amended claims

### Amended claims in accordance with Rule 137(2) EPC.

**1.** A method performed on a mobile device (11) having a speaker (216) and a display (214), comprising:
receiving (564) and storing (566) visual content on a non-transitory readable medium (240) at the mobile device (11);
associating (570) the visual content stored on the non-transitory readable medium (240) with a calendar event of a meeting;
monitoring (540) arrival of the calendar event;
receiving (556, 557) voice information and content synchronization information, the content synchronization information indicating a portion of the visual content; and
outputting the voice information through the speaker (216) and displaying (562) the indicated portion of the visual content on the display (214).

**2.** The method of claim 1, further comprising forming a calendar entry in a calendar program for the mobile device (11), the calendar entry comprising a link to the visual content stored on the non-transitory readable medium (240).

**3.** The method of any one of claims 1-2, further comprising monitoring the calendar entries to detect that the calendar entry has become active and responsively generating an indicator indicating that the visual content is to be presented.

**4.** The method of claim 3, further comprising initiating a content presentation application, and loading the portion of the visual content into the content presentation application for output.

**5.** A mobile device (11), comprising:
a processor (221);
a network interface (237);
a non-transitory readable medium (240), communicatively coupled to the processor (221), storing instructions, with the processor (221) executing the instructions to:
receiving (564) visual content through the network interface (237) and storing (566) the visual content on the non-transitory readable medium (240);
associating (570) the visual content stored on the non-transitory readable medium with a calendar event of a meeting;
monitoring (540) arrival of the calendar event;
receiving (556, 557) voice information and content synchronization information, the content synchronization information indicating a portion of the stored visual content; and
outputting the voice information and displaying the indicated portion of the visual content.

**6.** The mobile device (11) of claim 5, wherein the instructions further comprise instructions for creating a calendar entry with a link to the stored content.

**7.** The mobile device (11) of any one of claims 5-6, wherein the instructions further comprise instructions for monitoring a calendar application for the arrival of the calendar entry, responsively initiating a content presentation application, and loading the indicated portion of content in the content presentation application.

**8.** The mobile device (11) of claim 7, wherein a message distribution framework is operable to pass a message from the calendar application to the content presentation application indicating the portion of content to be loaded.

**9.** The mobile device (11) of any one of claims 5-8, wherein the instructions further comprise instructions for a content presentation application that can be activated based on an event generated from a calendar application.

**10.** The mobile device (11) of any one of claims 5-9, wherein the content presentation application is operable to receive messages passed on a message distribution framework, and identify a message indicating the portion of content to be loaded.

**11.** The mobile device (11) of any one of claims 5-10, wherein the instructions further comprise instructions for adding a calendar entry in a calendar program for the mobile device (11), the calendar entry comprising a link to the content stored on the non-transitory readable medium (240), and responsive to detecting that the calendar entry has become active, initiating a content presentation application, and the loading of the linked content in the content presentation application.

**12.** A system, comprising:
a server (6, 7) coupled to a network (2) and to a source of content, the server (6,7) configured to detect availability of a mobile device (11) to receive content pushed by the server (6, 7) to the mobile device (11), and responsively to push the content to the mobile device (11);
a mobile device (11) comprising a processor (221) capable of configuration by computer executable instructions to perform a method comprising
receiving (564) content pushed from the server (6, 7) to the mobile device (11);
storing (566) the content pushed from the server (6, 7) on a non-transitory readable medium (240);
associating (570) the visual content stored on the non-transitory readable medium (240) with a calendar event of a meeting;
monitoring (540) arrival of the calendar event;
receiving (556, 557) voice and content synchronization information on the mobile device (11), and using the content synchronization information to select a portion of the content from the non-transitory readable medium of the mobile device and to display on a display (214) of the mobile device (11) the selected portion of the content concurrently with outputting of the voice information through a speaker (216) of the mobile device (11).

**13.** The system of claim 12, further comprising a presentation controller for generating the content synchronization information based on commands received from a presentation unit controlled by a presenter.

**14.** The system of claim 13, wherein the presentation unit is operable to capturing audio information generated by the presenter and to capturing inputs indicative of changes to the portion of content to be displayed on the mobile device (11).
